**Europäisches Patentamt**

**European Patent Office**

**Office européen des brevets**

(19)

(11) Numéro de publication : **0 336 849 B1**

## (12) FASCICULE DE BREVET EUROPEEN

(45) Date de publication du fascicule du brevet :
**16.06.93 Bulletin 93/24**

(51) Int. Cl.$^5$ : **H02M 7/539**, H05G 1/32

(21) Numéro de dépôt : **89400962.0**

(22) Date de dépôt : **07.04.89**

(54) **Procédé de régulation de la tension d'un signal de tension, notamment pour tube à rayons X.**

(30) Priorité : **08.04.88 FR 8804706**

(43) Date de publication de la demande :
**11.10.89 Bulletin 89/41**

(45) Mention de la délivrance du brevet :
**16.06.93 Bulletin 93/24**

(84) Etats contractants désignés :
**DE ES GB IT NL**

(56) Documents cités :
**EP-A- 0 138 486
DE-A- 3 520 509
FR-A- 2 184 732
US-A- 4 541 041
US-A- 4 741 010**

(73) Titulaire : **GENERAL ELECTRIC CGR S.A.
100, rue Camille-Desmoulins
F-92130 Issy les Moulineaux (FR)**

(72) Inventeur : **Laeuffer, Jacques
CABINET BALLOT-SCHMIT 84, Avenue Kléber
F-75116 Paris (FR)**

(74) Mandataire : **Ballot, Paul Denis Jacques
Cabinet Ballot-Schmit, 7, rue le Sueur
F-75116 Paris (FR)**

## Description

La présente invention a pour objet un procédé de régulation de la tension d'un signal de tension. Elle concerne en général les applications dans lesquelles le contrôle d'une tension continue produite à partir d'une tension continue non régulée, hachée ou ondulée, éventuellement élevée, puis redressée, est en cause. Elle s'applique plus particulièrement dans le domaine médical où il est nécessaire de réguler la haute tension de tubes émetteurs à rayons X de manière à améliorer la fidélité de la nature des rayons X produits. Elle peut néanmoins trouver son application dans d'autres domaines. Dans le domaine médical l'invention trouve plus particulièrement une application dans le domaine des sénographes, dit aussi mamographes, où la qualité de la haute tension conditionne l'homogénéité des rayons X produits.

Les principes d'alimentation en haute tension des émetteurs à rayons X sont connus. Dans le cas des générateurs dit HF ils consistent pour l'essentiel, à partir d'une basse tension continue, à hacher, ou à onduler, cette basse tension. Cette basse tension ondulée est ensuite appliquée à un transformateur élévateur qui la transforme en une haute tension ondulée. Cette haute tension ondulée est ensuite redressée et filtrée de manière à produire la haute tension continue recherchée. Par un pont diviseur de résistances, on peut prélever un signal représentatif de la haute tension produite. On compare ensuite ce signal de mesure à une grandeur de référence et on détermine un signal d'erreur. Ce signal d'erreur est ensuite appliqué à un dispositif de régulation, de manière à maintenir à une consigne la haute tension produite. En général, le signal d'erreur est appliqué à un oscillateur à fréquence variable commandé en tension (VCO). Le signal de fréquence variable de cet oscillateur est appliquée comme signal de commande à l'onduleur.

Les valeurs généralement admises pour la fréquence d'oscillation de l'onduleur, sont de l'ordre de 15 KHz. Comme il s'agit en général d'onduleurs à thyristors, ou à transistors permettant le passage du courant dans un circuit résonnant dans un sens puis dans un autre, deux jeux de composants semi-conducteurs commandés sont mis en oeuvre. Le circuit pilote qui met en oeuvre ces jeux de composants semi-conducteurs débite un signal à fréquence double : de l'ordre de 30 KHz. La durée d'une impulsion de mise sous tension du tube à rayons X au moment d'une radiographie, en particulier dans un sénographe, est typiquement de l'ordre de 300 ms. Dans toute la suite de la description de l'invention cette impulsion de radiographie sera appelée une pose. Pendant la durée de cette pose, la haute tension entre la cathode et l'anode du tube doit croître, le plus rapidement possible, jusqu'à sa valeur nominale. Puis pendant toute la durée de la pose, elle doit rester le plus possible égale à cette valeur nominale. Pendant la durée d'une telle pose, le nombre des impulsions débitées par le circuit pilote est, avec les grandeurs indiquées, de l'ordre de dix mille. Le nombre d'impulsions de ce circuit pilote nécessaire pour faire monter la haute tension de zéro jusqu'à la valeur nominale est habituellement de l'ordre de 50.

Un onduleur comporte, branché aux bornes d'un circuit basse tension continu, au moins un jeu de composants semi-conducteurs en série avec un circuit oscillant et avec un transformateur élévateur. Lorsque les composants semi-conducteurs sont rendus passants par une impulsion de l'onduleur, une ondulation s'installe dans le circuit oscillant et elle est transformée par le transformateur élévateur. Cette ondulation est ensuite redressée par un redresseur en aval du transformateur élévateur et elle est appliquée à un circuit de filtrage de cette haute tension redressée. Ce circuit de filtrage comporte essentiellement des condensateurs. Pendant toute la durée d'une pose ces condensateurs sont donc soumis, d'une part, à une décharge relativement constante, et d'autre part à des recharges périodiques liées à l'arrivée des ondulations de recharge. La décharge constante est liée à l'utilisation du tube à rayons X : au type d'image que l'on veut produire.

Autrement dit cette haute tension produite ondule. Elle ondule même si elle est régulée. En effet, l'ondulation de cette haute tension est liée à la fréquence propre de l'onduleur, celle du circuit pilote, et, en définitive, elle ne disparaît que si le tube à rayons X ne débite pas. Ceci ne présente cependant pas d'intérêt puisque c'est le maintien constant de la haute tension du tube à rayons X pendant qu'il débite qui est recherché. Cette ondulation de la haute tension produite est une conséquence inhérente au principe de l'élévation de tension continue en tension continue.

Cette ondulation, peut présenter de nombreux inconvénients dans les appareils de radiographie médicale. En effet la dureté des rayons X est très fortement affectée par la haute tension disponible aux bornes du tube. Or, du creux de l'ondulation de la haute tension continue produite au sommet de cette ondulation, la dispersion de dureté des rayons X produits peut être telle que les images de radiographie disponibles sont faussées. Leur interprétation est sujette à caution.

Dans l'invention on a étudié le comportement ondulatoire de la haute tension produite et on a pu déterminer que le comportement ondulatoire retenu par les professionnels jusqu'ici n'était pas le meilleur. En effet, l'ondulation tolérée, qu'on appellera dans toute la suite de cette description $\delta KV$ est de la forme suivante :

$$\delta KV = f(KV, mA, E)$$

Dans cette formule KV représente la valeur nominale de la haute tension produite. La valeur mA représente le débit du tube, enfin, E représente la basse tension continue utilisée pour fabriquer la haute tension continue. La fonction f indiquée est une fonction complexe qui tient compte de la décharge, KV et mA, et de la qualité du circuit de filtrage haute tension après le redressement. La valeur δKV est normalement inférieure à un certain pourcentage de KV. Ce pourcentage est fixé par les habitudes de la profession. Il peut être de 30 %, voire plus, pour des machines à fonctionnement dégradé toléré. Il peut être de 4 % dans les sénographes.

Si E était parfaitement constant, on obtiendrait une ondulation d'amplitude δKV, de forme approximative en dents de scie, mais surtout constante. En définitive, l'homogénéité des rayons X produits serait celle qu'on lui connaîtrait. Mais en fait, E n'est pas constant. En effet, la basse tension continue utilisée peut être une basse tension continue obtenue à partir d'un réseau électrique dont la tension est redressée. La basse tension continue E ainsi redressée fluctue d'autant plus que le signal secteur redressé n'est même pas un signal secteur triphasé mais est au contraire un signal secteur monophasé. Par exemple, un signal secteur monophasé 50 Hz redressé, produit une basse tension elle-même avec des ondulations à 100 Hz (avec un redressement bi-alternance). Autrement dit, compte tenu des grandeurs indiquées, cette basse tension continue oscille de l'ordre de 30 fois pendant une pose. La fluctuation de la basse tension continue a pour conséquence un défaut de fonctionnement du système de régulation. En effet, si la courbe caractéristique de transfert de puissance d'un onduleur est fonction de la fréquence (ce dont on se sert pour réguler), elle est aussi fonction de la tension admise en entrée de cet onduleur. Autrement dit la puissance transmise par l'onduleur au moment du déclenchement d'une impulsion dépend de la tension qui alimente cet onduleur.

Il en résulte alors que l'amplitude de la fluctuation de la haute tension ondulée est variable au rythme des fluctuations de la basse tension continue d'alimentation. Ceci est lié à la conception des circuits de régulation. Ceux-ci comportent une mesure de la haute tension produite. Dès que la valeur de la haute tension produite passe en dessous de la valeur d'une tension de référence, l'onduleur est déclenché et envoie une impulsion de recharge. Ainsi, lorsque la basse tension d'alimentation est faible (dans le creux des ondulations de cette basse tension ondulée) la puissance transmise par l'onduleur est faible. En conséquence, la crête de l'ondulation de la haute tension redressée est dans ce cas relativement faible. Par contre, si la basse tension continue est forte (au moment des sommets des ondulations de cette basse tension ondulée), la puissance transmise par l'onduleur à chaque impulsion est plus forte, et la crête de l'ondulation de la haute tension ondulée est également plus forte.

Dans les deux cas la recharge des condensateurs de filtrage du circuit de redressement de haute tension est provoquée dès que cette haute tension devient égale à la valeur de la tension de référence. Il en résulte que, si à chaque impulsion de recharge la haute tension continue retombe à une valeur toujours identique, cette haute tension atteint par contre, en fonction des ondulations de la basse tension d'alimentation, des valeurs crêtes différentes. Autrement dit le spectre des rayons X produits ne peut pas être connu d'avance. De plus S K V dépend très fortement de l'état de la tension secteur et de la résistance de la ligne d'alimentation. Ceci aurait cependant pu être de peu d'importance à cause du nombre relativement élevé (30) de périodes du signal secteur pendant la durée d'une pose. Mais ceci est d'autant plus vrai qu'en pratique, au cours de la pose, la valeur moyenne de la basse tension d'alimentation chute régulièrement, ce qui fausse d'autant plus le fonctionnement du tube à rayons X. Un tel type de régulation correspond à une régulation impulsionnelle sur minimum ; il est un des moins bons.

Un autre type de régulation est connu. Il concerne la régulation linéaire. Dans ce cas également, on peut montrer que la valeur crête de la haute tension produite fluctue également comme l'ondulation de la basse tension d'alimentation, dans une proportion deux fois moindre cependant.

Dans l'invention on s'est rendu compte qu'il était préférable, si les fluctuations de la basse tension d'alimentation sont inévitables, de faire en sorte que la crête des ondulations de la haute tension produite soit située à une valeur constante, laissant l'ondulation de la basse tension agir sur les valeurs minima les atteintes par la haute tension au cours des charges successives appliquées par l'onduleur.

En pratique, ce n'est donc pas la réduction de l'amplitude de l'ondulation liée à la variation de la basse tension d'alimentation qui est visée dans l'invention mais plutôt le choix d'une valeur constante de crête des hautes tensions produites. En radiographie, on est sûr alors de disposer, quel que soit le fonctionnement du tube, d'une quantité toujours égale de rayons X durs dans le spectre. Le débit des rayons X moins durs supporte alors les conséquences non maîtrisées des variations de la haute tension. En définitive, plutôt que de disposer d'une dose connue de rayons X moins durs et d'une dose inconnue de rayons X durs, on dispose avec l'invention d'une dose connue de rayons X durs et d'une dose inconnue de rayons X moins durs. Il en résulte automatiquement une meilleure précision des images : les rayons X durs étant les plus qualifiant pour la formation des images. Un exemple d'un tel type de régulation est décrit dans le document DE-A-3 520 509, en combinaison toutefois avec une boucle de régulation linéaire. Cette régulation présente l'inconvénient d'être lente, notamment au démarrage d'une installation.

Pour résoudre ce problème lié essentiellement à la fluctuation de la basse tension d'alimentation, il a été nécessaire de prendre en compte les fluctuations de cette basse tension. Il aurait pu être envisageable de calculer en temps réel, ou mieux de tabuler, les variations de f(KV,mA,E) en fonction des ondulations basse fréquence de E. En pratique, on sait que si E varie de 10 %, δKV peut varier lui de 80 %. Une telle solution est donc possible en théorie. Mais si on se rappelle que E ondule à une fréquence de 100 Hz, ceci conduit à retenir un temps de calcul plus court que la période de cette fluctuation basse fréquence : par exemple 1 ms. Ce temps de calcul est trop court, compte tenu du nombre des opérations à effectuer, pour pouvoir être valablement utilisé (à faible coût) dans une installation de radiographie. Aussi, dans un perfectionnement de l'invention, plutôt que de faire une régulation qui tienne compte par calcul à la fois de la variation de la haute tension de sortie et de la variation de la basse tension d'alimentation, on préfère faire la régulation en ne tenant compte que des variations de la haute tension de sortie. Dans ce cas, cependant, on mesure l'ampleur de cette fluctuation à chaque impulsion de l'onduleur pour appliquer, pour une impulsion suivante de l'onduleur, une commande prenant en compte une variation d'ondulation précédente.

L'invention concerne donc un procédé de régulation de la tension d'un signal de tension dans lequel

- on fait onduler un signal basse tension de tension continue, avec un onduleur et à fréquence d'impulsions d'ondulation réglable, pour produire un signal basse tension ondulée, formé de quanta d'énergie,
- on élève la tension du signal basse tension ondulée pour produire un signal haute tension ondulée
- on redresse et on filtre le signal haute tension ondulée pour produire un signal de haute-tension continue,
- et on régule la tension de ce signal haute tension continue de façon que le maximum de cette haute tension continue atteigne, à chaque impulsion d'ondulation, un maximum prédéterminé,
caractérisé en ce que, pour que la tension du signal haute tension continue atteigne le maximum prédéterminé,
- on ondule avec un onduleur à résonance,
- on compare le maximum de cette tension du signal haute tension continue, pendant une ondulation, à une tension de référence diminuée de la variation de la tension redressée pendant une impulsion d'ondulation précédente, et
- on détermine l'instant d'amorçage d'une ondulation suivante de l'onduleur en fonction de cette comparaison.

Dans une utilisation préférée de l'invention le premier signal de tension continue est un signal basse tension. Le deuxième signal est un signal haute tension, et entre l'onduleur et le redresseur un transformateur permet d'élever la tension.

L'invention sera mieux comprise à la lecture de la description qui suit et à l'examen des figures qui l'accompagnent. Celles-ci ne sont données qu'à titre indicatif et nullement limitatif de l'invention. Les figures montrent

- figure 1 : un schéma synoptique d'un circuit pour mise en oeuvre du procédé de l'invention ;
- figures 2a à 2c : des résultats comparatifs des hautes tensions produites dans le procédé de l'invention et dans l'état de la technique ;
- figures 3a à 3f : Les diagrammes temporels de signaux rencontrés dans le procédé de l'invention.

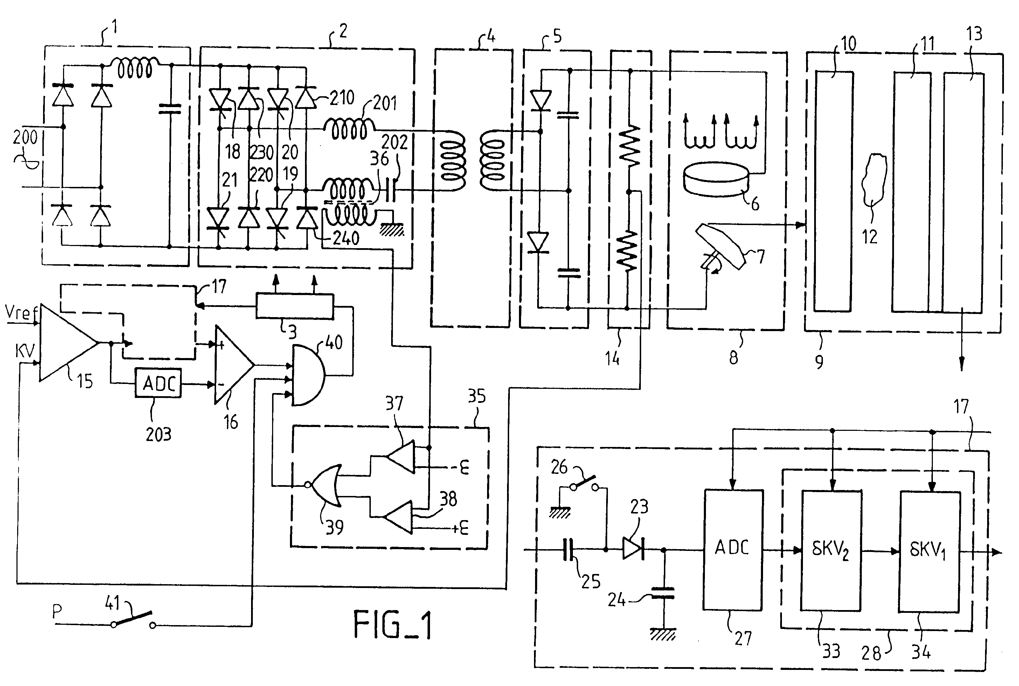

La figure 1 représente un schéma synoptique d'un circuit utilisable pour mettre en oeuvre le procédé de l'invention. Ce circuit comporte un premier redresseur 1 pour produire une basse tension continue, par exemple à partir d'un réseau secteur électrique monophasé 200. Le circuit 1 basse tension continue alimente un onduleur à résonance 2 commandé en fréquence par un circuit pilote 3. Le signal ondulé par l'onduleur 2 est élevé en tension dans un transformateur élévateur 4. La haute tension produite par le transformateur 4 est alors redressée puis filtrée dans un circuit 5 de redressement et de filtrage. La haute tension redressée est appliquée entre la cathode 6 et l'anode 7 d'un tube à rayons X 8. Dans un exemple, le tube à rayons X est un tube à anode tournante et il est utilisé dans un sénographe 9. Ce sénographe comporte classiquement un colimateur 10 et une grille mobile anti diffusante 11 interposés de part et d'autre d'un corps 12 à radiographier. Un récepteur 13, de type film radiosensible ou de type vidéo, rend compte des effets du rayonnement X sur le corps 12.

Un pont diviseur 14 permet de prélever un signal KV représentatif de la haute tension produite. Le signal KV est comparé dans un comparateur 15 à une tension de référence $V_{réf}$. Le comparateur 15 est également un amplificateur pour disposer d'un signal d'erreur de valeur appréciable. Dans l'invention, ce signal d'erreur est ensuite acheminé, schématiquement, d'une part directement et d'autre part indirectement vers un deuxième comparateur 16. Le chemin indirect comporte en intermédiaire un circuit de mémorisation 17. En substance, comme le système fonctionne par impulsions, le circuit de mémorisation est tel qu'il introduit dans le comparateur 16 un signal représentatif de la variation du signal d'erreur mesurée lors d'une impulsion précédente de l'onduleur.

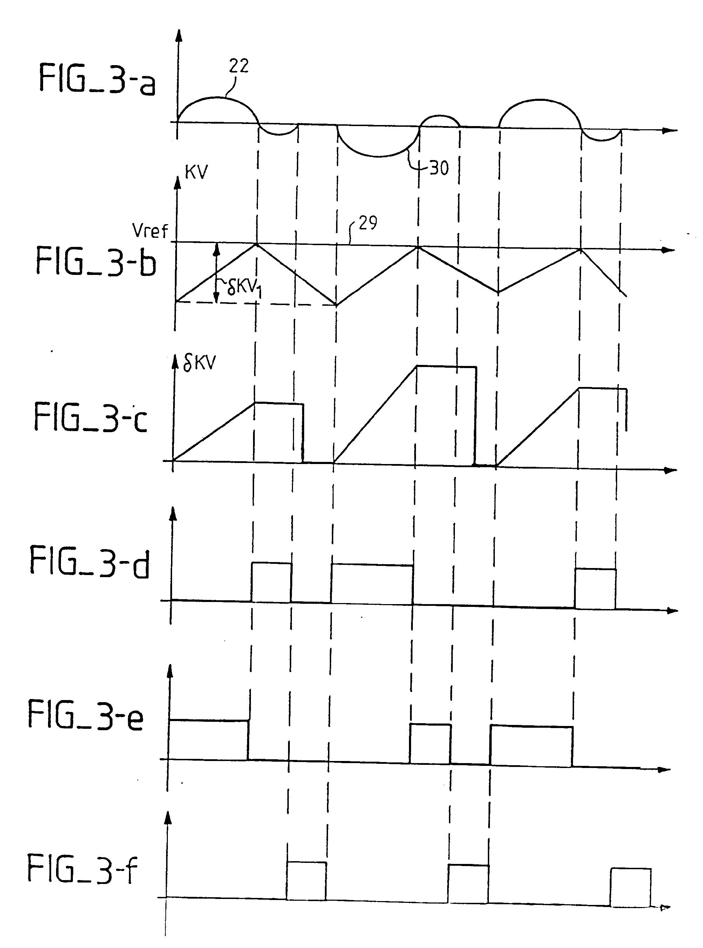

Le signal de la sortie du comparateur 16 est appliqué en commande au circuit 3 de pilotage des thyristors de l'onduleur 2. L'onduleur 2 comporte deux jeux de thyristors. Un premier jeu comporte les thyristors 18 et 19, et une deuxième jeu comporte les thyristors 20 et 21. Par exemple, pendant une première impulsion d'ondulation de l'onduleur 2, le thyristor 18 et le thyristor 19 sont rendus passants par le circuit pilote 3. Le front de tension qui franchit ces thyristors se traduit alors, à cause d'un circuit résonnant 201-202, par une ondulation 22 montrée sur la figure 3a. Le courant de retour, la partie négative de l'ondulation 22, est court circuité par un jeu de diodes 230 et 240. Le signal de l'ondulation 22 est élevé par le transformateur 4, puis redressé par le redresseur 5. Il s'ensuit que le signal KV, figure 3b, subit une élévation de tension. Après cette élévation de tension, la haute tension disponible aux bornes du tube 8 décroît en fonction de la charge présentée par ce tube.

Le circuit de mémorisation 17 est un circuit de mémorisation de crête. Il comporte dans ce but, par exemple, une diode 23, raccordée à une capacité série 24. Ce montage constitue un détecteur de crête. Ce détecteur de crête est précédé d'un circuit d'élimination de composante continue. Ce circuit d'élimination comporte essentiellement en amont un condensateur 25, en série, dont la mise à la masse de la borne aval est périodiquement effectuée au début de chaque impulsion. Autrement dit, une fois que l'interrupteur 26 a été momentanément fermé, puis réouvert (juste avant l'application de l'impulsion 22), la capacité 25 transmet un signal d'erreur amplifié $\delta KV$ par le comparateur-amplificateur 15. Ce signal $\delta kv$ reproduit, à la tension $V_{réf}$ près, les variations croissantes de la haute tension redressée (figure 3c). Par contre, alors que la haute tension redressée chute à la fin de l'application de l'impulsion de l'onduleur, le signal d'erreur est maintenu constant à sa valeur crête par la présence de la diode 23 du détecteur de crête. Le signal représentatif de la valeur crête du signal d'erreur, est ensuite transmis à une mémoire 28. Cette mémoire 28 assure une fonction de mémoire tampon. Si la mémoire 28 est de type mumérique elle doit être précédée d'un convertisseur analogique-numérique 27. D'une manière préférée la mémoire 28 est analogique. Elle permet de présenter au comparateur 16 une information représentative de l'évolution précédente de la haute tension redressée, lors de l'application d'une impulsion suivante de l'onduleur. On peut appeler $\delta KV_m$ le signal $\delta KV$ une fois que sa crête a été mémorisée. Pour l'homogénéité des traitements appliqués à $\delta KV$ et à $\delta KV_m$ la voie directe peut aussi comporter le cas échéant un convertisseur analogique numérique 203 en série.

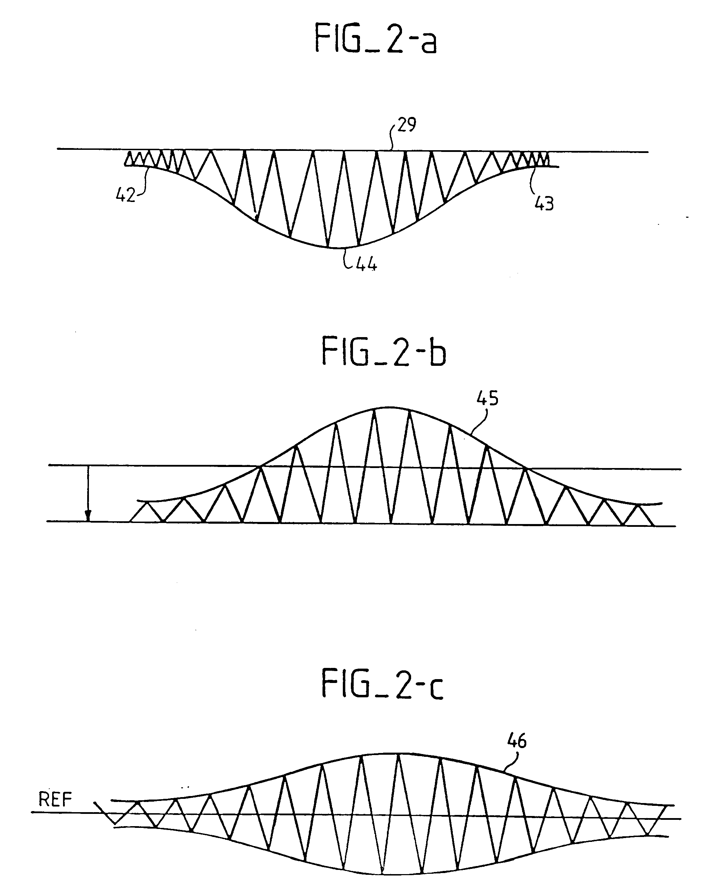

Le signal $\delta KV$ d'erreur est appliqué sur le comparateur 16 pour être comparé à la valeur du signal $\delta KV_m$ obtenu lors d'une impulsion d'ondulation précédente. La mise en cascade des deux comparateurs 15 et 16 et de la mémoire 28 a alors pour effet de comparer en définitive KV non pas à la tension de référence, mais à la tension de référence diminuée de la variation de la haute tension redressée pendant une impulsion d'ondulation précédente. Les effets d'une telle comparaison sont les suivants. Si les variations d'ondulation pendant les impulsions précédentes ont été constantes, en définitive si le phénomène d'ondulation de la basse tension ne s'est pas produit, on obtient une régulation parfaite. Que la référence soit prise à une valeur donnée ou à une autre, ce qui importe c'est qu'elle soit constante. Mais comme ce phénomène d'ondulation de la basse tension continue se produit on voit que dans l'invention on ne fait pas, à chaque fois, la comparaison de la haute tension délivrée à une valeur constante, mais au contraire à une valeur variable. Et, cet élément est l'essentiel dans l'invention, cette valeur variable tient en compte des fluctuations de la basse tension. Bien entendu, la régulation est construite de telle façon que la haute tension délivrée atteigne des crêtes toujours à une même hauteur. Ceci est représenté sur les figures 2a et 3b, par l'enveloppe 29 des crêtes de la haute tension produite.

Le fonctionnement du dispositif est le suivant. Supposons que la valeur crête due à la variation de la haute tension au cours de la charge du circuit de filtrage 5 pendant une impulsion de l'onduleur ait été $\delta KV_1$. Les comparateurs 15 et 16 ont pour objet de déclencher le circuit pilote 3, et donc l'onduleur 2, dès que la haute tension devient inférieure à $V_{réf} -\delta KV_1$. Une ondulation 30 est alors appliquée par l'onduleur 2 (figure 2b). Pour des raisons que l'on verra plus loin, cette ondulation est d'une alternance opposée à l'alternance 22, elle a néanmoins les mêmes effets et subit le même traitement quant à ses résultats que l'impulsion 22. Autrement dit on remarque qu'avec l'invention on envoie d'autant plus tardivement une impulsion suivante de recharge au moyen de l'onduleur que les effets de la charge précédente ont été mesurés comme étant importants. Intuitivement on comprend que si précédemment la basse tension se trouvait dans une situation favorable, elle était par exemple à un maximum de son ondulation, les effets sur la charge du circuit de filtrage 5 ont alors été importants. Dans ce cas la croissance de la haute tension délivrée aura eu tendance à être forte. Pour éviter alors une prise en compte trop généreuse de cette situation favorable de la basse tension continue d'alimentation à ce moment, on retarde l'application de l'impulsion de charge suivante. Pour simplifier on la retarde en fonction justement de cette valeur de la recharge. En pratique on attend que la haute tension ait décru d'autant plus que cette charge avait été forte. A l'opposé, si on se situe dans une phase défavorable de l'ondulation de la basse tension d'alimentation, la recharge des condensateurs de filtrage 5 sera peu importante : $\delta KV$ sera faible. Dans ce cas on provoque l'application d'une impulsion de recharge suivante plus précocement. On déclenche l'impulsion suivante le plus tôt possible. Il en résulte que pendant les phases de basse tension défavorables, l'onduleur 2 ondule plus vite que pendant les phases de basse tension favorables. On comprend alors que cette manière d'agir a pour effet que la haute tension produite par le circuit de filtrage 5 possède des valeurs crêtes dont l'enveloppe est une droite horizontale.

Pour des raisons de fonctionnement de type alternatif, on utilise un deuxième jeu de thyristors 20 et 21 mis en service en alternance avec le jeu des thyristors 18 et 19. Le jeu des thyristors 20 et 21 en commun avec des diodes complémentaires 210 et 220 joue un rôle similaire, mais pour une polarité de sens opposé, au rôle du jeu des thyristors 18 et 19. Le jeu des thyristors 20 et 21 donne naissance à l'ondulation 30. Dans le cas des applications haute tension les effets des deux jeux de thyristors ne sont pas égaux et, en conséquence, le fonctionnement ne serait pas parfait si on déclenchait les ondulations 30 en fonction des mesures effectuées pendant une charge du circuit de filtrage 5 due aux ondulations 22. Dans ce but, la mémoire 28 comporte deux mémoires en cascade 33 et 34 permettant, par le jeu de la cascade, de présenter au comparateur 16 la variation de la grandeur de consigne qui correspond à l'alternance adéquate à corriger.

Ainsi, la mémoire 33 est en relation avec la mémoire 34. Lorsque la diode 23 produit la grandeur $\delta KV_1$ cette grandeur est stockée dans la mémoire 33. Lorsque, pendant l'impulsion suivante, la diode 23 produit la grandeur $\delta KV_2$, celle-ci prend la place de la grandeur $\delta KV_1$ dans la mémoire 33. Cette grandeur $\delta KV1$ est alors chassée dans la mémoire 34, tandis que le précédent contenu de la mémoire 34 est alors appliqué au comparateur 16 pour corriger les effets, la variation présente, de la haute tension. Le circuit pilote 3 sert en définitive à intervertir, à chaque impulsion d'ondulation, le jeux des thyristors ainsi qu'a déclencher d'une manière synchronisée l'interrupteur 26, les éventuels convertisseur 27 et 203, et le décalage entre les mémoires 33 et 34 et le comparateur 16.

Dans un mode préféré de réalisation le procédé est mis en oeuvre avec des onduleurs de type discontinu. Des onduleurs de type discontinu sont des onduleurs dans lesquels les ondulations 22 et 30, y compris leur queue d'ondulation, ne peuvent pas être présentes en même temps. Dans ce but, on réalise un circuit de validation 35, mesurant le passage du courant dans le circuit oscillant 201-202 de l'onduleur 2. Par exemple, un petit transformateur 36 prélévateur est mis en série dans le circuit oscillant. Le signal prélevé représentatif du courant est appliqué dans le circuit 35 à un double jeu de comparateurs 37 et 38. Dans ces comparateurs il est comparé respectivement à - ε et à + ε (ε étant une référence de faible valeur). Les signaux disponibles en sortie de ces comparateurs sont respectivement présentés sur les figures 3d et 3e. Ils représentent la polarité du courant. Les signaux de sortie des comparateurs 37 et 38 sont alors appliqués aux entrées d'une porte NOR 39 dont le signal de sortie est représenté sur la figure 3f. Le signal de sortie de la porte NOR 39 est le signal de validation produit par le circuit de validation 35. Tant que le signal de validation du circuit 35 est à zéro une porte ET 40 qui reçoit ce signal de validation interdit la transmission d'un signal de commande au circuit pilote 3. Le circuit 35 assure ainsi la discontinuité temporelle entre l'application des ondulations 22 et 30. La porte 40 reçoit en outre un signal de pose P appliqué à l'initiative d'un opérateur agissant sur un interrupteur 41.

Lorsque l'interrupteur 41 est fermé, par exemple par un opérateur, le circuit pilote 3 met en service un des jeux de thyristors. Une impulsion d'ondulation de l'onduleur est produite. Le transformateur 4 élève la tension de cette ondulation. Cette ondulation élevée est redressée par le circuit 5. Compte tenu de la valeur importante de la référence (correspondant à la haute tension nominale $V_{réf}$ à atteindre) le comparateur-amplificateur 15 et le comparateur 16 sont alors saturés. Le signal disponible en sortie du comparateur 16 et à une entrée correspondante de la porte 40 est alors à 1 tant que cette tension de référence n'a pas été atteinte. Dans ces conditions le circuit 35 valide l'envoi des impulsions de l'onduleur 2 avec un temps minimum entre la fin d'une impulsion et le départ de la suivante. En pratique cette fin et ce départ sont presque simultanés. En conséquence, la haute tension croît rapidement dans le circuit de redressement et filtrage 5 jusqu'à sa valeur nominale attendue. Le circuit de validation 35 ne sert donc qu'à produire la discontinuité de fonctionnement de l'onduleur entre les alternances de deux types qu'il est susceptible de produire.

Dès que la haute tension s'approche de la référence le circuit 17 entre en action de telle façon que le maximum de cette haute tension ait une valeur égale à la valeur de référence imposée.

La figure 2a montre l'allure du signal de haute tension obtenu avec le procédé de l'invention. Les figures 2b et 2c montrent les allures des signaux obtenus précédemment dans l'état de la technique. Sur la figure 2a on distingue nettement les phases 42 et 43 pendant lesquelles l'ondulation de la basse tension d'alimentation a été défavorable, et pendant lesquelles l'onduleur a fonctionné à fréquence plus élevée (puisqu'on à chaque fois déclenché plus précocement). Les ondulations sont très rapprochées les unes des autres. Par contre, pendant les phases favorables 44, la fréquence de l'onduleur est plus faible mais les charges plus fortes (puisqu'on à chaque fois déclenché plus tardivement). Sur les figures 2b et 2c, on montre les enveloppes 45 et 46 des valeurs crêtes respectivement de la haute tension régulée selon que la régulation était de type impulsionnel sur le minimum avec correction de consigne ou bien qu'elle était une régulation de type linéaire classique. Dans tous les cas, les figures 2b et 2c montrent qu'une enveloppe en forme de droite 29 n'est pas obtenue pour les valeurs crête de la haute tension. Dans l'invention, avec une enveloppe des valeurs crêtes en forme de droite on assure que le spectre des rayons X durs n'est pas dispersé.

## Revendications

1. Procédé de régulation de la tension d'un signal de tension dans lequel
   - on fait onduler (2) un signal basse tension de tension continue (1), avec un onduleur et à fréquence d'impulsions d'ondulation réglable (3), pour produire un signal basse tension ondulée, formé de quanta d'énergie,
   - on élève (4) la tension du signal basse tension ondulée pour produire un signal haute tension ondulée
   - on redresse et on filtre (5) le signal haute tension ondulée pour produire un signal de haute-tension continue,
   - et on régule (14-17) la tension de ce signal haute tension continue de façon que le maximum de cette haute tension continue atteigne, à chaque impulsion d'ondulation, un maximum (29) prédéterminé, caractérisé en ce que, pour que la tension du signal haute tension continue atteigne le maximum prédéterminé,
   - on ondule avec un onduleur à résonance,
   - on compare (14,15,23-24) le maximum de cette tension du signal haute tension continue, pendant une ondulation, à une tension de référence diminuée de la variation de la tension redressée pendant une impulsion d'ondulation précédente, et
   - on détermine l'instant d'amorçage d'une ondulation suivante de l'onduleur en fonction de cette comparaison.

2. Procédé selon la revendication 1 caractérisé en ce que pour déterminer la fréquence de l'onduleur,
   - on déclenche (16) une impulsion suivante de l'onduleur dès que la haute tension du signal haute tension continue est devenue inférieure au maximum prédéterminé ($V_{réf}$), diminué de la mesure ($\delta KV$) de la variation de cette haute tension continue pendant une impulsion précédente.

3. Procédé selon la revendication 2 caractérisé en ce que
   - on effectue une ondulation bi-alternance, et,
   - on déclenche une alternance d'impulsions de l'onduleur en fonction de la mesure de la variation de la tension du signal haute tension continue pendant une alternance d'impulsions précédente du même type (33,34) que celle à déclencher.

4. Procédé selon l'une quelconque des revendications 1 à 3 caractérisé en ce que pour mesurer la variation de la tension du signal haute tension continue pendant une ondulation, on mesure (23-26) la variation absolue de cette haute tension continue avec un détecteur de crête.

5. Procédé selon la revendication 4 caractérisé en ce qu'avant de mesurer la variation absolue on remet à zéro (25,26) le détecteur de crête avant chaque mesure.

6. Procédé selon l'une quelconque des revendications 1 à 5 caractérisé en ce qu'on valide (35) le fonctionnement de l'onduleur à chaque impulsion pour éviter de déclencher une impulsion suivante avant la fin d'une impulsion précédente.

## Patentansprüche

1. Verfahren zur Regelung der Spannung eines Spannungssignals, bei dem
   - ein Gleichspannungs-Niederspannungssignal (1) mit einem Wechselrichter und mit einstellbarer Wechselrichtungsimpulsfrequenz (3) wellengeformt wird (2), um ein welliges Niederspannungssignal, geformt mit Energierquanten, zu erzeugen,
   - die Spannung des welligen Niederspannungssignals angehoben wird (4), um ein welliges Hochspannungssignal zu erzeugen,
   - das wellige Hochspannungssignal gleichgerichtet und gefiltert wird (5), um ein Gleichspannungs-Hochspannungssignal zu erzeugen, und
   - die Spannung dieses Gleichspannungs-Hochspannungssignals geregelt wird (14-17) derart, daß das Maximum der hohen Gleichspannung bei jedem Gleichrichtungsimpuls ein vorbestimmtes Maximum (29) erreicht,
   dadurch **gekennzeichnet**, daß
   - damit die Spannung des Gleichspannungs-Hochspannungssignals das vorbestimmte Maximum erreicht,
   - mit einem Resonanzwechselrichter wellengeformt wird,
   - das Maximum der Spannung des Gleichspannungs-Hochspannungssignals während einer Schwingungswelle mit einer um die Änderung der gleichgerichteten Spannung während eines vorhergehenden Wellenumformungsimpulses verringerten Referenzspannung verglichen wird (14, 15, 23-24) und

- der Einsetzzeitpunkt einer folgenden Wellenumformung des Wechselrichters abhängig von diesem Vergleich bestimmt wird.

2. Verfahren nach Anspruch 1, dadurch **gekennzeichnet**, daß zur Bestimmung der Frequenz des Wechselrichters
 - ein nachfolgender Impuls des Wechselrichters ausgelöst wird (16), sobald die hohe Spannung des Gleichspannungs-Hochspannungssignals kleiner als das vorbestimmte Maximum ($V_{réf}$) geworden ist, verringert um das Ma ($\delta kV$) der Änderung dieser Gleichspannungs-Hochspannung während eines vorhergehenden Impulses.

3. Verfahren nach Anspruch 2, dadurch **gekennzeichnet**, daß
 - eine Zwei-Halbperioden-Wechselrichtung ausgeführt wird und
 - eine Wechselfolge von Impulsen des Wechselrichters abhängig vom Maß der Änderung der Spannung des Gleichspannungs-Hochspannungssignals während einer vorhergehenden Impulshalbperiode derselben Art (33, 34) wie die auszulösende ausgelöst wird.

4. Verfahren nach einem beliebigen der Ansprüche 1 bis 3, dadurch **gekennzeichnet**, daß zum Messen der Änderung der Spannung des Gleichspannungs-Hochspannungssignals während einer Schwingungswelle die absolute Änderung dieser Gleichspannungs-Hochspannung mit einem Spitzenwert-Detektor gemessen wird (23-26).

5. Verfahren nach Anspruch 4, dadurch **gekennzeichnet**, daß der Spitzenwert-Detektor vor jeder Messung vor dem Messen der absoluten Änderung auf Null zurückgesetzt wird (25, 26).

6. Verfahren nach einem beliebigen der Ansprüche 1 bis 5, dadurch **gekennzeichnet**, daß die Funktion des Wechselrichters bei jedem Impuls freigegeben wird (35), um das Auslösen eines nachfolgenden Impulses vor dem Ende eines vorhergehenden Impulses zu vermeiden.

**Claims**

1. A method of regulating the voltage of a voltage signal in which
 - a low tension, unidirectional voltage signal (1) is caused to fluctuate (2) by means of a pulse generator and at an adjustable fluctuation pulse frequency (3), so as to produce a fluctuating low tension signal comprising quanta of energy,
 - the voltage of the fluctuating low tension signal is amplified (4) so as to produce a fluctuating high tension signal,
 - the fluctuating high tension signal is rectified and filtered (5) so as to produce a unidirectional high tension signal,
 - and the voltage of the said unidirectional high tension signal is adjusted (14-17) in such a way that this unidirectional high voltage reaches a predetermined maximum value (29) at each fluctuation pulse, characterised in that, in order that the voltage of the unidirectional high tension signal shall attain the predetermined maximum value,
 - fluctuation is applied with a resonance pulse generator,
 - the maximum value of the said voltage of the unidirectional high tension signal is compared (14, 15, 23-24), during one fluctuation, with a reference voltage reduced by the variation in the rectified voltage during a preceding fluctuation pulse, and
 - the instant at which a following fluctuation of the pulse generator starts is determined in accordance with the said comparison.

2. A method according to Claim 1, characterised in that, in order to determine the frequency of the pulse generator,
 - a following pulse is produced (16) from the pulse generator when the high voltage of the unidirectional high tension signal becomes smaller than the predetermined maximum (Vref), reduced by the measured value ($\delta$ KV) of the variation in the said unidirectional high voltage during a preceding pulse.

3. A method according to Claim 2, characterised in that
 - a bidirectional fluctuation is effected, and
 - pulse alternation is produced by the pulse generator according to the degree of the variation in the voltage of the bidirectional high tension signal during a preceding pulse alternation of the same type (33, 34) as that which is to be produced.

4. A method according to any one of Claims 1 to 3, characterised in that, in order to measure the variation in the voltage of the unidirectional high tension signal during one fluctuation, the absolute variation in the said unidirectional high voltage is measured (23-26) with a peak value detector.

5. A method according to Claim 4, characterised in that, before the absolute variation is measured, the peak value detector is reset to zero (25, 26) prior to each measuring operation.

6. A method according to any one of Claims 1 to 5, characterised in that the operation of the pulse generator is validated (35) on each pulse, so as to avoid the production of a following pulse before the end of a preceding pulse.

FIG_1

# FIG_2-a

# FIG_2-b

# FIG_2-c

FIG_3-a

22

30

KV

Vref

29

FIG_3-b

$\delta KV_1$

$\delta KV$

FIG_3-c

FIG_3-d

FIG_3-e

FIG_3-f